# EUROPÄISCHE PATENTSCHRIFT

(11) **EP 2 121 489 B1**
(45) Veröffentlichungstag und Bekanntmachung des Hinweises auf die Patenterteilung: **11.04.2012**
(21) Anmeldenummer: 08707745.9
(22) Anmeldetag: 15.02.2008
(51) Int. Cl.: B65G 19/02, B65G 47/22

(54) **FÖRDEREINRICHTUNG ZUM TRANSPORT VON FÖRDERGUTTRÄGERN LÄNGS EINER FÖRDERSTRECKE**
CONVEYOR FOR TRANSPORTING CARRIERS FOR GOODS TO BE TRANSPORTED ALONG A TRANSPORT PATH
CONVOYEUR POUR LE TRANSPORT DE SUPPORTS D'ARTICLES A TRANSPORTER LE LONG D'UNE VOIE DE TRANSPORT

(30) Priorität: 16.02.2007 DE 102007007833
(43) Veröffentlichungstag der Anmeldung: 25.11.2009
(73) Patentinhaber: RSL Logistik GmbH & Co. KG, 86899 Landsberg (DE)
(72) Erfinder: SCHÖNENBERGER, Rolf, 86899 Landsberg am Lech (DE)
(74) Vertreter: Tiesmeyer, Johannes
(86) Internationale Anmeldenummer: PCT/EP2008/001184
(87) Internationale Veröffentlichungsnummer: WO 2008/098785

(56) Entgegenhaltungen:
- EP-A- 0 623 497
- DE-A1- 19 816 688
- DE-A1- 19 825 955
- DE-A1- 19 943 141

## Beschreibung

Die Erfindung betrifft eine Fördereinrichtung zum Transport von Fördergutträgern längs einer Förderstrecke, umfassend
- wenigstens eine die Fördergutträger längs der Förderstrecke führende Schiene,
- Bandantriebsmittel und
- ein mittels der Bandantriebsmittel um Umlenkungen, insbesondere Umlenkrollen umlaufend anzutreibendes und zumindest bereichsweise entlang der Schiene verlaufendes Endlosband als Antriebsband, mit dem die Fördergutträger reibschlüssig zur Mitbewegung koppelbar sind.

Eine Fördereinrichtung der vorstehend genannten Art ist z. B. aus der EP 0 623 497 A1 bekannt. Es handelt sich dabei um eine Hängefördereinrichtung für Fördergutträger, die jeweils von einem Trägerkörper beidseitig abstehende Laufrollen aufweisen und an der Laufschiene bewegbar sind. Die Fördergutträger sind mit jeweils einer Laufrolle in eine Führungsrille der Schiene eingreifend seitlich an der Schiene angehängt, wobei ihre Trägerkörper näherungsweise vertikal positioniert sind. Unterhalb des Laufflächenprofils der Schiene befindet sich eine Führung für ein Endlosreibband, welches als Antriebsband für die Fördergutträger zur Bewegung in Richtung der Förderstrecke angetrieben wird. Die einseitig an dem Laufflächenprofil der Schiene angehängten Fördergutträger kommen mit ihrer Reibfläche, die an einem von dem Trägerkörper seitlich abstehenden Kopplungsabschnitt vorgesehen ist, mit dem Reibband in reibschlüssigen Kontakt, so dass das Reibband die betreffenden Fördergutträger reibschlüssig längs der Förderstrecke mitnehmen kann.

In der EP 0 623 497 A1 und in der DE 198 16 688 A1 sind Möglichkeiten beschrieben, die Fördergutträger mit Freischaltmitteln auszustatten, die unter Wirkung des Staudrucks in einem Fördergutträgerstau aktivierbare Trenneinrichtungen zum zeitweisen Lösen der reibschlüssigen Kopplung zwischen Fördergutträger und Reibband aufweisen. Dabei schalten im Stau vorausgehend angehaltene Fördergutträger jeweils unmittelbar nachrückende Fördergutträger zur Aufhebung oder Verminderung ihrer Reibschlusskopplung mit dem Endlosband frei. Zur Bildung eines solchen Staus wird ein erster Fördergutträger mittels einer Blockiereinrichtung angehalten, so dass die nachfolgenden Fördergutträger aufeinander auflaufen und einer nach dem anderen den jeweils folgenden vom Reibbandantrieb freischaltet. Zum Abbau des Staus lässt die Blockiereinrichtung den im Stau vordersten und die weiteren Fördergutträger passieren, wobei ein Fördergutträger nach dem anderen wieder mit dem Reibband in Mitnahmekontakt kommt.

Die DE 198 25 955 A1 beschreibt eine Hängefördereinrichtung, bei der die Fördergutträger mit einer Kette transportiert werden. Diese Antriebskette kann auch als Antriebsband dienen und trägt dazu in einer Ausführungsform eine Mehrzahl von einzelnen Reibelementen, beispielsweise ein Reibelement pro Kettenglied. Die Fördergutträger greifen mit ihrer Reibfläche an einem der Reibelemente an und werden durch die Antriebskette reibschlüssig mitgenommen.

Solche Hängefördereinrichtungen haben sich bewährt. Sie werden z. B. in der Bekleidungsindustrie oder in Großwäschereien eingesetzt, wobei die Fördergutträger als sogenannte Bügelträger ausgestaltet sind, die einen unteren Fördergutaufnahmeabschnitt in Form eines Hakens aufweisen, an dem ein Kleiderbügel angehängt werden kann. Derartige Fördereinrichtungen mit einem konventionellen Reibbandantrieb funktionieren in den meisten Fördersituationen sehr gut und erlauben in der schon angesprochenen Weise ein Stauen der Fördergutträger bei weiterlaufendem Reibband.

Ein Nachteil solcher Reibbandantriebe liegt darin, dass während der normalen Transportsituation Schlupf zwischen dem Reibband und der Reibfläche eines jeweiligen Fördergutträgers auftreten kann, wobei dies auch noch von der Beschaffenheit der Reibflächen und dem Gewicht des beladenen Fördergutträgers abhängt. Solche Positionsungenauigkeiten der Fördergutträger während des Transports längs der Förderstrecke erschweren die Wegverfolgung der einzelnen Fördergutträger und erfordern einen erhöhten Aufwand für die Überwachung des Eintreffens jeweiliger Fördergutträger an bestimmten Stellen der Förderstrecke, so etwa an Weichen zum Ausschleusen bestimmter Fördergutträger aus der Förderstrecke. Aufgrund der Positionsungenauigkeit der Fördergutträger sind auch deren Abstände zueinander längs der Förderstrecke meist weitgehend undefiniert oder sie bilden gruppenweise Cluster ohne Abstand der Fördergutträger voneinander.

Der Erfindung liegt die Aufgabe zugrunde, eine Fördereinrichtung der eingangs genannten Art bereitzustellen, welche eine präzisere Wegverfolgung von Fördergutträgern längs der Förderstrecke mit einfachen Mitteln ermöglicht.

Zur Lösung dieser Aufgabe wird erfindungsgemäß vorgeschlagen, dass mit dem Antriebsband längs der Schiene mitlaufende Bandabschnittsteiler vorgesehen sind, die das Antriebsband der Länge nach in aufeinander folgende Bandabschnitte strukturieren, denen einzelne Fördergutträger zu deren Antrieb zugeordnet werden können, wobei die Bandabschnittsteiler Mitnehmerelemente sind, die eine formschlüssige Ineingriffnahme der Fördergutträger zur Mitnahme längs der Förderstrecke ermöglichen.

Vorzugsweise ist die formschlüssige Ineingriffnahme zwischen jeweiligen Mitnehmerelementen und Fördergutträgern zumindest in einem Bereich der Förderstrecke aufhebbar bzw. unterdrückbar unter fortgesetzter Möglichkeit der Reibschlusskopplung der Fördergutträger mit dem Endlosband, so dass ein Umschalten von formschlüssigem Mitnehmerantrieb auf Schlupf erlaubenden Reibbandantrieb erfolgen kann, z. B. um eine Staubildung zu ermöglichen.

Erfindungsgemäß bietet die Fördereinrichtung die Möglichkeit der Zuordnung einzelner Fördergutträger zu einzelnen Antriebsbandabschnitten, da deren jeweilige Position bei der Bewegung längs der Förderstrecke aufgrund der Bandstrukturierung durch die Abschnittsbegrenzer besser bestimmt und zur Steuerung von Weichen etc. leichter auswertbar ist. Insbesondere können auf diese Weise Mindestabstände zwischen aufeinander folgenden und jeweils einzelnen Antriebsbandabschnitten zugeordneten Fördergutträgern bei deren Transport mittels der Fördereinrichtung sichergestellt werden, um Reaktionszeiten von Weichenschaltelementen zu berücksichtigen, so dass eine etwa erforderliche Weichenschaltung zwischen zwei aufeinander folgend die betreffende Weiche der Fördereinrichtung erreichenden Fördergutträgern sicher möglich ist.

Eine Variante der Erfindung sieht vor, dass die Mitnehmerelemente an einem von dem als Reibband ausgebildeten Endlosband gesonderten Antriebsband angeordnet und von diesem angetrieben sind. Der Abstand zwischen zwei aufeinander folgenden Mitnehmerelementen definiert einen Bereich zur Aufnahme eines jeweiligen Fördergutträgers oder ggf. einer bestimmten Gruppe von Fördergutträgern. Die Mitnehmerelemente können z. B. in einem Staubereich der Förderstrecke aus ihrer die Fördergutträger hintergreifenden Mitnahmestellung in eine die Fördergutträger freigebende Passivstellung überführt werden. Dies kann z. B. durch eine entsprechende Führung des Mitnehmerantriebsbandes im Staustreckenbereich oder durch Bewegung der einzelnen Mitnehmer relativ zu ihrem Antriebsband erfolgen. Die Fördergutträger können dennoch reibschlüssig von dem Reib-Endlosband bewegt werden, solange sie nicht durch Blockiermittel zur Staubildung angehalten werden oder auf irgendeine Weise vom Reibbandantrieb abgekoppelt werden.

Gemäß einer bevorzugten Ausführungsform der Erfindung sind die Mitnehmerelemente unmittelbar an dem Reib-Endlosband angeordnet. Dies erspart den konstruktiven Aufwand und die Komponenten für den gesonderten Antrieb der Mitnehmerelemente im Vergleich mit der vorstehend angesprochenen Variante des Fördergutträgers nach der Erfindung. Das Endlosband kann ein Flachband, insbesondere Stahl-Flachband sein, wie es abgesehen von den Mitnehmerelementen auch bei bekannten Reibbandantrieben Verwendung findet, wobei das Flachband jedoch für die Zwecke der vorliegenden Erfindung mit von einer Flachseite vorzugsweise starr abstehenden Stiften versehen ist, die der Reihe nach in vorzugsweise gleichmäßigen Abständen aufeinander folgen und die Mitnehmerelemente bilden.

Die formschlüssige Kopplung zwischen einem jeweiligen Mitnehmerelement und einem jeweiligen schienengeführten Fördergutträger ist gemäß einer Weiterbildung der Erfindung durch eine bestimmte Relativbewegung zwischen dem Mitnehmerelement und dem Fördergutträger quer zur Förderrichtung aufhebbar unter fortgesetzter Möglichkeit der Reibschlusskopplung der Fördergutträger mit dem Endlosband, wobei Mittel zur Auslösung einer solchen bestimmten Relativbewegung vorgesehen sind. Eine solche Relativbewegung kann eine Hub- bzw. Absenkbewegung des Fördergutträgers relativ zu dem Mitnehmerelement - und/oder eine Hub- bzw. Absenkbewegung des Mitnehmerelementes relativ zu dem Fördergutträger sein, wobei die Mitnehmerelemente in einer der veränderten Höhenstellungen an den schienengeführten Fördergutträgern grundsätzlich vorbeibewegt werden können, ohne darin eine Störkontur vorzufinden. Vorzugsweise hat die Schiene in einem bestimmten Förderstreckenabschnitt einen solchen Verlauf, dass sie die Fördergutträger relativ zu dem Endlosband auf ein Höhenniveau anhebt bzw. absenkt, um die formschlüssige Kopplung zwischen Mitnehmerelementen und Fördergutträgern herzustellen bzw. aufzuheben, wobei die reibschlüssige Kopplung zwischen den Fördergutträgem und Mitnehmerelementen in dem bestimmten Förderstreckenabschnitt bedarfsweise fortgesetzt möglich ist.

Die Fördereinrichtung nach der Erfindung eignet sich insbesondere zur Integration in Sortieranlagen, bei deren Betrieb es darauf ankommt, dass Fördergutträger in einem definierten Zeitabstand von einer Stelle der Förderstrecke zu einer anderen Stelle der Förderstrecke gelangen, wie dies z. B. der Fall beim Ausschleusen von Fördergutträgern aus der Förderstrecke in mehrere Abzweigstrecken der Fall ist. Bei bekannter Antriebsgeschwindigkeit des Endlosbandes kann die Wegverfolgung der Bügelträger durch Zeitmess- bzw. Zählvorgänge erfolgen, um jeweilige Schaltereignisse an Ausschleusweichen rechtzeitig zu triggern.

Die Fördereinrichtung nach der Erfindung ist in ihrer meist bevorzugten Ausführungsform als Hängefördereinrichtung ausgebildet, bei der die Fördergutträger an der Schiene hängend längs der Förderstrecke bewegbar geführt sind, wobei die Fördergutträger einen Basiskörper, einen Anhängabschnitt zur Abstützung an der Schiene, einen Fördergutaufnahmeabschnitt und einen Reibkopplungsabschnitt mit einer im Transportzustand des betreffenden Fördergutträgers an der Schiene seitlich zum Endlosband orientierten Reibfläche zur reibschlüssigen Kopplung mit dem Endlosband aufweisen. Der Basisaufbau der Hängefördereinrichtung nach der Erfindung kann abgesehen von erfindungsfunktionellen Anpassungen so gestaltet sein, wie es in der EP 0 623 497 A1 oder der DE 198 16 688 A1 erläutert ist.

Bei der Hängefördereinrichtung nach der Erfindung können Fördergutträger in Streckenabschnitten, in denen die formschlüssige Kopplung zwischen Mitnehmerelementen und Fördergutträgern aufgehoben ist, zu einem Fördergutträgerstau aufgestaut werden, wobei die Fördergutträger Freischaltmittel aufweisen, mit denen im Stau vorausgehend angehaltene Fördergutträger jeweils unmittelbar nachrückende Fördergutträger unter Staudruckwirkung zur Aufhebung oder zumindest Verminderung ihrer Reibschlusskopplung mit dem Endlosband freischalten. Die Fördergutträger können z. B. so aufgebaut und mit den betreffenden Freischaltmitteln ausgestaltet sein, wie es in der DE 198 16 688 A1 oder der EP 0 623 497 A1 beschrieben ist.

Gegenstand der Erfindung ist ferner ein Antriebsband nach Anspruch 12 für eine Fördereinrichtung erfindungsgemäßer Bauart. Eine Weiterbildung des Antriebsbandes ist in dem Anspruch 13 angegeben.

Ausführungsbeispiele der Erfindung werden im Folgenden unter Bezugnahme auf die Figuren näher erläutert.
- Fig. 1: zeigt in einer perspektivischen Ansicht einen Abschnitt einer bevorzugten Ausführungsform der Fördereinrichtung nach der Erfindung.
- Fig. 2: zeigt eine Variante des Ausführungsbeispiels aus Fig. 1 in perspektivischer Ansicht.
- Fig. 3a-3c: zeigen in einer Seitenansicht, Rückansicht und Draufsicht einen Abschnitt eines weiteren Ausführungsbeispiels der Fördereinrichtung nach der Erfindung.
- Fig. 4: zeigt ein Ausführungsbeispiel eines Antriebsbandes nach der Erfindung.

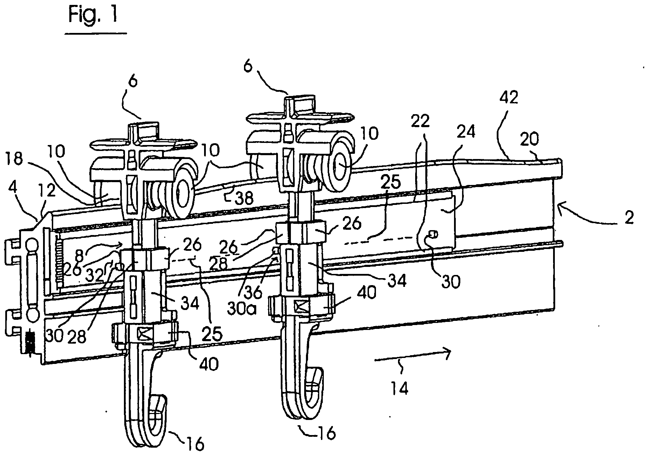

In Fig. 1 ist eine Führungsschiene 2 mit einem oberen Laufflächenprofil 4 zur Abstützung daran geführter Fördergutträger 6 erkennbar. Bei diesen Fördergutträgern 6 handelt es sich im Beispielsfall um sog. Bügelträger, wie sie beispielsweise in der Bekleidungsindustrie oder in Großwäschereien zum Transport von an Kleiderbügeln hängenden Kleidungsstücken auch schon in konventionellen Fördereinrichtungen der hier betrachteten Art verwendet werden. Die Erfindung ist jedoch nicht auf einen solchen Anwendungsfall beschränkt.

Die Fördergutträger haben einen Basiskörper 8 mit zwei zu entgegengesetzten Seiten davon abstehendenden konischen Laufrollen 10, deren Profil näherungsweise komplementär zu dem Laufflächenprofil 4 ausgebildet ist. Wie aus Fig. 1 zu ersehen ist, sind die Fördergutträger 6 einseitig mit einer Laufrolle 10 an der Schiene 2 angehängt, so dass die Laufrolle 10 an der Lauffläche 12 der Schiene abrollen kann. Die Fördergutträger 6 können auf diese Weise schienengeführt längs der Förderstrecke in der mit dem Pfeil 14 gekennzeichneten Förderrichtung transportiert werden.

An ihrem unteren Ende weisen die Fördergutträger 6 einen Fördergutaufnahmeabschnitt in Form eines Hakens 16 auf, an den das zu transportierende Fördergut angehängt werden kann.

Unterhalb der in die Kehle 18 der Laufrolle 10 eingreifenden Spitze 20 des Laufflächenprofils 4 der Schiene 2 ist eine Führung 22 vorgesehen, in der ein Reibband 24 für den Antrieb von Bügelträgern 6 längs der Schiene 2 verläuft. Bei dem Reibband 24 handelt es sich in der betriebsmäßigen Ausführungsform um ein Endlosband, das von Umlenktrommeln an betreffenden Umlenkstationen herumgeführt ist. Zum reibschlüssigen Antrieb der Bügelträger 6 steht das Reibband 24 an seiner nach außen weisenden Flachseite mit einer Reibfläche 26 des jeweiligen Bügelträgers 6 reibschlüssig in Verbindung, so dass der Bügelträger 6 bei Bewegung des Reibbandes 24 längs der Laufschiene 2 von dem Reibband 24 mitgenommen werden kann. Die Fördergutträger 6 haben unterhalb der Laufrollen 10 jeweils einen Reibkopplungsabschnitt 28, der einen verdickten Bereich des Basiskörperträgers 8 bildet und an entgegengesetzten Seiten Reibflächen 26 aufweist. Je nachdem, in welcher Orientierung der Fördergutträger 6 an die Laufschiene 2 angehängt wird, kommt die eine oder die andere Reibfläche 26 zum Einsatz. Soweit das Ausführungsbeispiel nach Fig. 1 bisher erläutert wurde, entspricht es weitgehend dem Stand der Technik nach der EP 0 623 497 A1.

Als erfinderische Besonderheit kommt bei der in Fig. 1 gezeigten Fördereinrichtung jedoch hinzu, dass das Reibband 24 Abschnittsbegrenzer in Form von Stiften 30 aufweist, die an der nach außen weisenden Seite des Reibbandes 24 nach außen hin abstehen und in vorzugsweise gleichmäßigen Abständen voneinander der Reihe nach auf gleicher Höhe angeordnet sind. Die Abschnittsbegrenzer 30 grenzen Reibschlussmitnahmeabschnitte 25 gegeneinander ab, wobei es sich bei letzteren um die Reibbandabschnitte zwischen zwei aufeinander folgenden Stiften 30 handelt. Üblicherweise wird im normalen Förderbetrieb jeweils maximal ein Fördergutträger 6 pro Reibschlussmitnahmeabschnitt 25 gefördert, wobei der betreffende Fördergutträger 6 je nach seiner Lage innerhalb des zugeordneten Reibschlussmitnahmeabschnittes 25 nur unter Reibschlusskopplung mit dem Reibschlussmitnahmeabschnitt 25 oder auch unter formschlüssiger Kopplung mit einem Abschnittsbegrenzerstift 30 vom Antriebsband 24 längs der Förderstrecke mitgenommen wird.

Die Mitnehmerelemente 30 ermöglichen eine formschlüssige Ineingriffnahme der Fördergutträger 6 zur Mitnahme längs der Förderstrecke. In Förderstreckenabschnitten, in denen eine solche formschlüssige Mitnahme erlaubt ist, etwa längs Sortierstrecken, an denen Fördergutträger gezielt in Abzweigstrecken mittels Weichen ausgeschleust werden sollen, können die Mitnehmerelemente 30 die Fördergutträger 6 an den verdickten Bereichen 28 hintergreifen und somit eine formschlüssige Kopplung herstellen. In Fig. 1 ist dieser Fall für den in Förderrrichtung 14 nachlaufenden Fördergutträger 6 bei 32 skizziert.

Sollte ein Fördergutträger 6 irgendwo in einem Reibschlussmitnahmeabschnitt 25 zwischen zwei aufeinander folgenden Mitnehmerelementen 30 reibschlüssig mit dem Reibband 24 gekoppelt sein, so kann durch nachgiebige Bremsbarrieren, die auf den Fördergutträger 6 wirken, bedarfsweise erreicht werden, dass er ggf. unter Erzeugung eines Schlupfes zwischen der Reibflächenpaarung solange gebremst wird, bis formschlüssige Berührung zwischen Mitnehmerelement 30 und betreffendem Fördergutträger 6 hergestellt ist. Damit ist die Position des Fördergutträgers 6 an dem Reibband 24 noch besser definiert, was eine genaue Wegverfolgung des Fördergutträgers 6 längs der Förderstrecke auf der Basis von Zeitmess- und/oder Mitnehmerzählvorgängen erleichtert. Für den üblichen Förderbetrieb reicht es jedoch gewöhnlich aus, dass ein jeweiliger Fördergutträger 6 an irgendeiner Stelle des ihm zugeordneten Reibschlussmitnahmeabschnittes 25 am Antriebsband 24 reibschlüssig angekoppelt ist.

Für den Fall, dass in Bereichen der Förderstrecke der formschlüssige Antrieb der Fördergutträger 6 unterdrückt werden soll, etwa in Staubereichen, so kann es durch einen Höhenversatz zwischen dem verdickten Bereich 28 der Fördergutträger 6 und den Mitnehmerelementen 30 erreicht werden, dass die Mitnehmerelemente 30 auf Höhe einer schlankeren Stelle 34 des Basiskörpers 8 des Fördergutträgers 6 laufen, so dass sie den Fördergutträger 6 nicht mehr erreichen können, wenn sie bei angehaltenem Fördergutträger 6 relativ zu diesem bei weiterlaufendem Reibband 24 vorbewegt werden.

In Fig. 1 ist diese Situation für den in Förderrichtung 14 vorlaufenden Fördergutträger 6 bei 36 angedeutet. Der dort erkennbare Mitnehmerstift 30a findet in dem Fördergutträger 6 keine Störkontur vor und kann sich unterhalb des verdickten Bereiches 28 des Basiskörpers 8 relativ zu dem Fördergutträger 6 berührungslos an diesem vorbeibewegen, wenn der Fördergutträger 6 an einer Barriere abgebremst wird. Der Fördergutträger 6 ist dann nur noch dem Reibschluss mit dem Reibband 24 an einer Stelle oberhalb der Mitnehmerreihe ausgesetzt und kann in einem Stau angehalten werden. Die Aufhebung der formschlüssigen Kopplung zwischen Mitnehmerelement 30 und Fördergutträger 6 erfolgt im Beispielsfall der Fig. 1 dadurch, dass das Laufflächenprofil der Laufschiene 2 eine Anhebung auf ein größeres Höhenniveau bei 38 erfährt, so dass die daran geführten Fördergutträger 6 relativ zu den auf dem ursprünglichen Höhenniveau verbleibenden Mitnehmerelementen 30 um einen geringen Betrag angehoben werden. Damit bei Staubildung von Fördergutträgern 6 in solchen Förderstreckenbereichen die Reibflächen 26 der Fördergutträger und des Reibbandes 24 keiner übermäßigen Verschleißbeanspruchung ausgesetzt werden und eine Entlastung der Bandantriebsmittel erfolgen kann, weisen die Fördergutträger 6 Freischaltmittel 40 auf, mit denen die Fördergutträger 6 sich gegenseitig im Stau vom Reibbandantrieb freischalten können, so dass der jeweilige Fördergutträger 6 im freigeschalteten Zustand seitlich so weit verschwenkt ist, dass seine Reibfläche 26 von dem Reibband 24 freikommt. Derartige Freischaltmittel sind z. B. aus der EP 0 623 497 A1 oder der DE 198 16 688 A1 an sich bekannt, so dass darauf nicht weiter einzugehen ist.

Soll der in Fig. 1 in Förderrichtung 14 vorlaufende Fördergutträger 6 wieder zum Weitertransport mit dem Reibband 24 gekoppelt werden, so kann er freigegeben werden, so dass er unter Reibschlussantrieb den Bereich 42 der Absenkung der Lauffläche 12 des Laufflächenprofils 4 der Schiene erreicht und sein verdickter Bereich 28 dann wieder mit einem Mitnehmerelement 30 in Anschlagberührung kommen kann.

Bei dem Ausführungsbeispiel der Fig. 1 wurde die Aufhebung der etwaigen formschlüssigen Kopplung dadurch erreicht, dass der Fördergutträger 6 relativ zu den Mitnehmerelementen 30 quer zur Förderrichtung bewegt, nämlich vorliegendenfalls angehoben wurde.

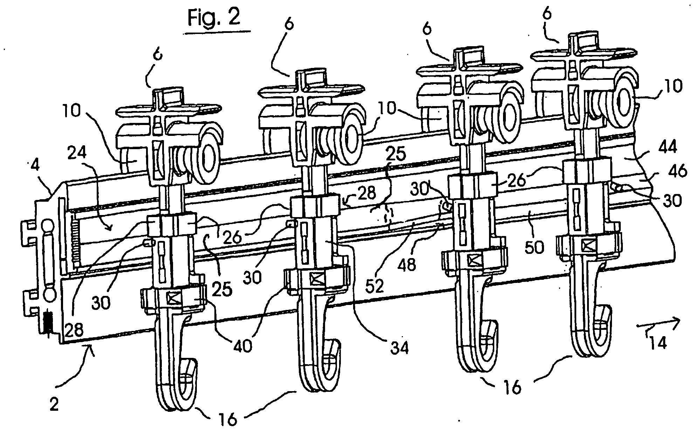

Denkbar ist es im Rahmen der Erfindung jedoch auch, dass die Mitnehmerelemente 30 relativ zu den Fördergutträgern 6 quer zur Förderrichtung 14 bewegt werden. Ein solches Beispiel ist in Fig. 2 gezeigt.

Elemente in Fig. 2, die vom Aufbau und ihrer Wirkungsweise Elementen in Fig. 1 entsprechen, sind mit den jeweils gleichen Bezugszeichen gekennzeichnet, so dass insoweit auf die Beschreibung des ersten Ausführungsbeispiels Bezug genommen werden kann. Die folgenden Erläuterungen des Ausführungsbeispiels nach Fig. 2 beschränken sich daher auf Unterschiede zum ersten Ausführungsbeispiel.

Das Endlos-Antriebsband 24 in Fig. 2 ist der Länge nach aufgeteilt in einen oberen Bereich 44 für die reibschlüssige Kopplung mit Reibflächen 26 der Fördergutträger 6 und einen unteren Bereich 46 mit davon abstehenden Mitnehmerelementen 30 für die formschlüssige Mitnahme von Fördergutträgern längs der Förderstrecke 14. Bei dem Ausführungsbeispiel gemäß Fig. 2 hintergreifen die Mitnehmerelemente 30 die Fördergutträger 6 unterhalb des verdickten Reibkopplungsabschnittes 28 zur Mitnahme längs der Förderstrecke 14. Im Ausführungsbeispiel gemäß Fig. 2 sind die Mitnehmerstifte 30 daher etwas länger als die Mitnehmerstifte 30 in Fig. 1. In Fig. 2 sind die beiden nachlaufenden Fördergutträger 6 in formschlüssigem Eingriff mit den Mitnehmerstiften 30 gezeigt.

Zumindest der untere Abschnitt 46 des Reibbandes 24 ist insoweit flexibel biegsam, dass er aus der ursprünglichen Reibbandebene bedarfsweise herausverschwenkt werden kann, um die Mitnehmerstifte 30 zur Schienenseite hin so weit zurückzuziehen, dass sie mit Fördergutträgern 6 an der Laufschiene 2 keinen Kontakt mehr bekommen können. Eine solche Situation ist in Fig. 2 in dem vorderen Bereich 48 der Schiene 2 für die beiden vorlaufenden Fördergutträger 6 dargestellt. In diesem Bereich 48 weist die Schiene 2 eine Ausnehmung 50 im unteren Bereich der Bandführung auf, wobei untere Führungselemente 52 das untere Ende des unteren Bandabschnitts 46 in diese Ausnehmung 50 hineinführen, so dass der Bandabschnitt 46 zum Schieneninneren hin gebogen wird, mit der Folge, dass die Mitnehmerelemente 30 so weit zurückgezogen werden, dass sie mit Fördergutträgern 6 an der Laufschiene 2 nicht mehr in Kontakt kommen können. In solchen Bereichen 48 sind die Fördergutträger 6 dann nur dem Reibschluss zwischen ihren Reibflächen 26 und der gegenüberliegenden Reibfläche des oberen Bandabschnitts 44 ausgesetzt. In diesen Förderstreckenbereichen kann somit bei Bedarf ein Stau von Fördergutträgern gebildet werden.

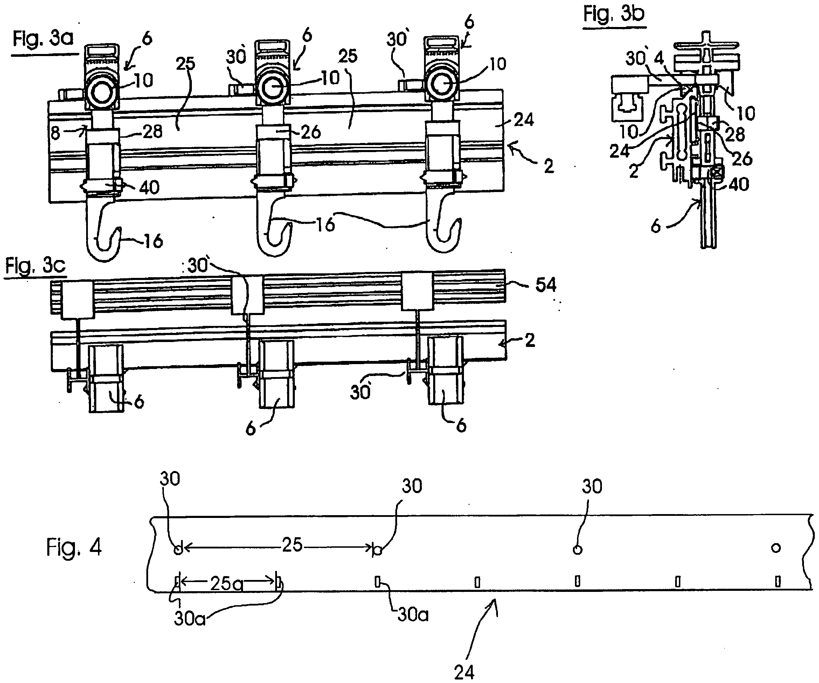

In den Fig. 3a - 3c ist eine weitere Ausführungsform einer Fördereinrichtung nach der Erfindung dargestellt. Die Ausführungsform gemäß Fig. 3a - 3c unterscheidet sich von den anderen Ausführungsformen insbesondere dadurch, dass das Reibband 24 in den Fig. 3a - 3c ein konventionelles Reibband ohne Mitnehmerelemente ist. Die reibschlüssige Förderung der Mitnehmerelemente und der dazu erforderliche Aufbau unterscheidet sich daher insoweit nicht von gattungsgemäßen Hängefördereinrichtungen, wie sie z. B. aus der EP 0 623 497 A1, der DE 198 16 688 A1 oder der DE 199 43 141 A1 bekannt sind. Erfindungsgemäß kommt jedoch bei dem Ausführungsbeispiel der Erfindung nach den Fig. 3a - 3c hinzu, dass ein mit dem Reibband 24a mitlaufendes gesondertes Antriebsband 54 vorgesehen ist, an dem Mitnehmerelemente 30' in vorzugsweise gleichmäßigen Abständen hintereinander angeordnet sind. Das gesonderte Antriebsband 54 ist vorzugsweise eine Kette, deren Antrieb vom Antrieb des Reibbandes abgeleitet ist. In einer abgewandelten Ausführungsform kann das gesonderte Band 54 auch einen eigenen Antrieb haben, welcher eine bedarfsweise unterschiedliche Geschwindigkeit des Bandes 54 im Vergleich zur Geschwindigkeit des Bandes 24 ermöglicht.

Die Mitnehmerelemente 30' sind vorzugsweise aus Kunststoff hergestellte Mitnehmerarme, welche knapp oberhalb des Laufprofils 4 der Schiene 2 Fördergutträger 6 zur formschlüssigen Mitnahme hintergreifen können.

Nicht gezeigt sind Bewegungsmechanismen, welche das Aufheben der formschlüssigen Kopplung zwischen Mitnehmerelementen 30' und Fördergutträgern 6 ermöglichen. Eine solche Entkopplung kann z. B. dadurch erfolgen, dass das Antriebsband 54 so abgelenkt wird, dass es sich von der Schiene abschnittsweise entfernt, so dass die Mitnehmerelemente 30' in solchen Abschnitten die Fördergutträger auf der Schiene nicht mehr erreichen können. Denkbar ist auch bei dem Ausführungsbeispiel nach Fig. 3, dass die Mitnehmerelemente 30' relativ zu ihrem Antriebsband 54 aus der Mitnahmestellung herausbewegt werden können.

In Fig. 4 ist ein Teil eines Antriebsbandes 24 nach der Erfindung gezeigt. Es ist im Beispielsfall ein Stahl-Flachband mit zwei nebeneinander verlaufenden Reihen von Bandabschnittsteilern 30, 30a. Die Bandabschnittsteiler 30 sind Stifte, die von der dem Betrachter der Fig. 4 zugewandten Flachseite des Bandes 24 nach außen abstehen und Reibschlussmitnahmeabschnitte 25 voneinander abgrenzen. Die Bandabschnittsteiler 30a stehen ebenfalls von der Flachseite des Bandes 24 nach außen ab, wobei sie jedoch kleinere Reibschlussmitnahmeabschnitte 25a begrenzen. Die Bandabschnittsteiler 30a sind zur Mitnahme von Fördergutträgern eingerichtet, die sich von denen unterscheiden, welche von den Bandabschnittsteilern 30 mitgenommen werden können. Hinsichtlich der Mitnahme von Fördergutträgern sind die Bandabschnittsteiler 30, 30a somit selektiv. Die Bandabschnittsteiler 30, 30a können zu diesem Zweck z. B. unterschiedliche Stiftlängen aufweisen.

## Patentansprüche

1. Fördereinrichtung zum Transport von Fördergutträgern (6) längs einer Förderstrecke, umfassend
- wenigstens eine die Fördergutträger (6) längs der Förderstrecke führende Schiene (2),
- Bandantriebsmittel und
- ein mittels der Bandantriebsmittel um Umlenkungen umlaufend anzutreibendes und zumindest bereichsweise entlang der Schiene (2) verlaufendes Endlosband (24) als Antriebsband, mit dem die Fördergutträger (6) reibschlüssig zur Mitbewegung koppelbar sind,
wobei mit dem Antriebsband (24) längs der Schiene (2) mitlaufende Bandabschnittsteiler (30, 30') vorgesehen sind, die das Antriebsband (24) der Länge nach in aufeinander folgende Bandabschnitte (25) strukturieren, denen einzelne Fördergutträger (6) zu deren Antrieb zugeordnet werden können,
**dadurch gekennzeichnet, dass** die Bandabschnittsteiler (30, 30') Mitnehmerelemente sind, die eine formschlüssige Ineingriffnahme von Fördergutträgern (6) ermöglichen.

2. Fördereinrichtung nach Anspruch 1, **dadurch gekennzeichnet, dass** die Ineingriffnahme zwischen jeweiligen Mitnehmerelementen (30, 30') und Fördergutträgern (6) zumindest in einem Bereich der Förderstrecke aufhebbar bzw. unterdrückbar ist unter fortgesetzter Möglichkeit der Reibschlusskopplung der Fördergutträger (6) mit dem Antriebsband (24).

3. Fördereinrichtung nach Anspruch 1 oder 2, **dadurch gekennzeichnet, dass** die Mitnehmerelemente (30) an dem Antriebsband (24) angeordnet sind.

4. Fördereinrichtung nach einem der vorhergehenden Ansprüche, **dadurch gekennzeichnet, dass** die Bandabschnittsteiler (30, 30') in gleichmäßigen Abständen aufeinander folgen.

5. Fördereinrichtung nach einem der Ansprüche 1 bis 4, **dadurch gekennzeichnet,**
**dass** das Antriebsband (24) ein Flachband, insbesondere Stahl-Flachband, ist und die Bandabschnittsteiler (30, 30') vom Antriebsband starr abstehende, Mitnehmerelemente bildende Stifte sind.

6. Fördereinrichtung nach einem der Ansprüche 1 bis 5, **dadurch gekennzeichnet, dass** eine formschlüssige Kopplung zwischen einem jeweiligen Mitnehmerelement (30) und einem jeweiligen schienengeführten Fördergutträger durch eine bestimmte Relativbewegung zwischen dem Mitnehmerelement (30) und dem Fördergutträger (6) quer zur Förderrichtung (14) aufhebbar bzw. unterdrückbar ist unter fortgesetzter Möglichkeit der Reibschlusskopplung der Fördergutträger (6) mit dem Antriebsband (24) und dass Mittel zur Auslösung der bestimmten Relativbewegung vorhanden sind.

7. Fördereinrichtung nach einem der vorhergehenden Ansprüche 1 bis 6, **dadurch gekennzeichnet, dass** die formschlüssige Kopplung zwischen einem jeweiligen Mitnehmerelement und einem jeweiligen schienengeführten Fördergutträger durch eine Torsionsbewegung des Antriebsbandes in einem betreffenden Bandabschnitt unter Verschwenken der Mitnehmerelemente aufhebbar bzw. herstellbar ist und dass Mittel zur Auslösung der Torsionsbewegung vorhanden sind.

8. Fördereinrichtung nach Anspruch 7, **dadurch gekennzeichnet, dass** die Relativbewegung eine Hub- bzw. Absenkbewegung des Fördergutträgers (6) relativ zu dem Mitnehmerelement (30) - und/oder eine Hub- bzw. Absenkbewegung des Mitnehmerelementes relativ zu dem Fördergutträger ist und dass Mittel zur Auslösung der Hub- bzw. Absenkbewegung vorhanden sind.

9. Fördereinrichtung nach einem der vorhergehenden Ansprüche 1 bis 8, **dadurch gekennzeichnet, dass** die Schiene (2) in einem bestimmten Förderstreckenabschnitt einen solchen Verlauf aufweist, dass sie die Fördergutträger (6) relativ zu dem Antriebsband (24) auf ein Höhenniveau anhebt bzw. absenkt, um die formschlüssige Kopplung zwischen Mitnehmerelementen (30) und Fördergutträgern (6) herzustellen bzw. aufzuheben, wobei die reibschlüssige Kopplung zwischen den Fördergutträgern (6) und Mitnehmerelementen (30) in dem bestimmten Förderstreckenabschnitt fortgesetzt möglich ist.

10. Fördereinrichtung nach einem der vorhergehenden Ansprüche 1 bis 9, **dadurch gekennzeichnet, dass** es eine Hängefördereinrichtung ist, bei der die Fördergutträger (6) an der Schiene (2) hängend längs der Förderstrecke bewegbar geführt sind, wobei die Fördergutträger (6) einen Basiskörper (8), einen Anhängabschnitt (10) zur Abstützung an der Schiene (2), einen Fördergutaufnahmeabschnitt (16) und einen Reibkopplungsabschnitt (28) mit einer im Transportzustand des betreffenden Fördergutträgers (6) an der Schiene (2) seitlich zum Antriebsband (24) orientierten Reibfläche (26) zur reibschlüssigen Kopplung mit dem Antriebsband (24) aufweisen.

11. Fördereinrichtung nach einem der vorhergehenden Ansprüche 1 bis 10, **dadurch gekennzeichnet, dass** Fördergutträger (6) in Streckenabschnitten, in denen die formschlüssige Kopplung zwischen Mitnehmerelementen (30) und Fördergutträgern (6) aufgehoben ist, zu einem Fördergutträgerstau staubar sind, wobei die Fördergutträger (6) Freischaltmittel (40) aufweisen, mit denen im Stau vorausgehend angehaltene Fördergutträger (6) jeweils unmittelbar nachrückende Fördergutträger (6) zur Aufhebung oder zumindest Verminderung ihrer Reibschlusskopplung mit dem Antriebsband (24) freischalten.

12. Antriebsband für eine Fördereinrichtung nach einem der vorhergehenden Ansprüche, welches als Flachband ausgebildet ist und wenigstens eine in Bandlängsrichtung verlaufende Reibfläche zur reibschlüssigen Kopplung mit Fördergutträgern (6) aufweist, wobei es von einer Flachseite des Flachbandes abstehende Bandabschnittsteiler (30) aufweist, die das Antriebsband (24) der Länge nach in aufeinander folgende Bandabschnitte (25) strukturieren, denen einzelne Fördergutträger (6) zu deren Antrieb zugeordnet werden können, **dadurch gekennzeichnet, dass** die Bandabschnittsteiler (30) als Mitnehmerelemente (30), insbesondere Stifte (30), zur formschlüssigen Kopplung mit Fördergutträgern (6) ausgebildet sind.

13. Antriebsband nach Anspruch 12, **dadurch gekennzeichnet, dass** mehrere nebeneinander verlaufende Reihen von in Bandlängsrichtung aufeinander folgenden Mitnehmerelementen (30) vorgesehen sind.

## Claims

1. A conveyor device (10) for transporting carriers (6) for goods to be conveyed along a conveyor path, comprising
- at least one rail (2) guiding the conveyed goods carriers (6) along the conveyor path,
- belt drive means and
- a continuous belt (24) used as a drive belt, which is to be driven by the belt drive means to pass around deflection elements and which extends at least in sections along the rail (2), and with which the conveyed goods carriers (6) can be coupled frictionally for movement together,
wherein belt section dividers (30,30') are provided which are entrained along the rail (2) and which delineate the drive belt (24), according to its length, in successive belt sections (25), with which individual conveyed goods carriers (6) can be associated for their drive,
**characterised in that** the belt section dividers (30, 30') are entrainment elements which make possible form-locking engagement of conveyed goods carriers (6).

2. A conveyor device according to Claim 1, **characterised in that** the engagement between respective belt section dividers (30,30') and conveyed goods carriers (6) can be cancelled or suppressed at least in one zone of the conveyor path with continued possibility of frictional coupling of the conveyed goods carriers (6) with the drive belt (24).

3. A conveyor device according to Claim 1 or 2, **characterised in that** the entrainment elements (30) are disposed on the drive belt (24) .

4. A conveyor device according to any one of the preceding Claims, **characterised in that** the belt section dividers (30,30') succeed one another at uniform distances apart.

5. A conveyor device according to any one of Claims 1 to 4, **characterised in that** the drive belt (24) is a flat belt, in particular a steel flat belt, and the belt section dividers (30, 30') are pins forming entrainment elements and protruding rigidly from the drive belt.

6. A conveyor device according to any one of Claims 1 to 5, **characterised in that** a form-locking coupling between a respective entrainment element (30) and a respective rail-guided conveyed goods carrier can be cancelled or suppressed by a given relative movement between the entrainment element (30) and the conveyed goods carrier (6) transversely to the conveyor direction (14), with continued possibility of frictional coupling of the conveyed goods carriers (6) with the drive belt (24), and **in that** means for triggering the given relative movement are provided.

7. A conveyor device according to any one of the preceding Claims 1 to 6, **characterised in that** the form-locking coupling between a respective entrainment element and a respective rail-guided conveyed goods carrier can be cancelled or established by a torsional movement of the drive belt in a relevant belt section, with pivoting of the entrainment elements, and **in that** means for triggering the torsional movement are provided.

8. A conveyor device according to Claim 7, **characterised in that** the relative movement is a raising or lowering movement of the conveyed goods carrier (6) relative to the entrainment element (30) and/or is a raising or lowering movement of the entrainment element relative to the conveyed goods carrier, and **in that** means for triggering the raising or lowering movement are provided.

9. A conveyor device according to any one of the preceding Claims 1 to 8, **characterised in that** in a given conveyor path section the rail (2) has such a course that it raises or lowers the conveyed goods carriers (6) relative to the drive belt (24) to a height level so as to establish or cancel respectively the form-locking coupling between entrainment elements (30) and conveyed goods carriers (6), wherein the frictional coupling between the conveyed goods carriers (6) and entrainment elements (30) continues to be possible in the given conveyor path section.

10. A conveyor device according to any one of the preceding Claims 1 to 9, **characterised in that** it is a suspended conveyor device, in which the conveyed goods carriers (6) are movably guided along the conveyor path suspended from the rail (2), wherein the conveyed goods carriers (6) have a base member (8), a trailer portion (10) for support on the rail (2), a conveyed goods receiving portion (16) and friction coupling portion (28) with a friction surface (26), which in the transport condition of the relevant conveyed goods carrier (6) on the rail (2) is aligned laterally with respect to the drive belt (24), for frictional coupling with the drive belt (24).

11. A conveyor device according to any one of the preceding Claims 1 to 10, **characterised in that** conveyed goods carriers (6) can accumulate to form a conveyed goods carrier accumulation in the path sections in which the form-locking coupling between entrainment elements (30) and conveyed goods carriers (6) is cancelled, in which case the conveyed goods carriers (6) have release means (40), with which conveyed goods carriers (6) previously halted in the accumulation each release directly advancing conveyed goods carriers (6) so as to cancel or at least decrease their frictional coupling with the drive belt (24).

12. A drive belt for a conveyor device according to any one of the preceding Claims, which is in the form of a flat belt and has at least one friction surface extending in the belt longitudinal direction for frictional coupling with conveyed goods carriers (6), wherein it has belt section dividers (30) which protrude from a flat side of the flat belt and which delineate the drive belt (24), according to its length, in successive belt sections (25), with which individual conveyed goods carriers (6) can be associated for their drive, characterisedin that the belt section dividers (30) are in the form of entrainment elements (30), in particular pins (30), for form-locking coupling with conveyed goods carriers (6).

13. A drive belt according to Claim 12, characterisedin that a plurality of rows of entrainment elements (30) are provided, which extend side by side and succeed one another in the belt longitudinal direction.

## Revendications

1. Convoyeur pour le transport de supports d'articles à transporter (6) le long d'une voie de transport, comprenant
- au moins un rail (2) menant les supports d'articles à transporter (6) le long de la voie de transport,
- des moyens d'entraînement de bande et
- une bande sans fin (24) s'étendant au moins par endroits le long du rail (2) et à entraîner de manière rotative autour de déviations à l'aide des moyens d'entraînement de bande, laquelle bande sans fin sert de bande d'entraînement permettant de coupler par friction les supports d'articles à transporter (6) pour le mouvement associé,
sachant que des séparateurs de section de bande (30, 30') tournant avec la bande d'entraînement (24) le long du rail (2) sont prévus, lesquels structurent la bande d'entraînement (24) selon la longueur en sections de bande successives (25), auxquelles des supports d'articles de transport (6) individuels peuvent être associés pour leur entraînement,
**caractérisé en ce que** les séparateurs de section de bande (30, 30') sont des éléments d'entraînement qui permettent aux supports d'articles de transport (6) de venir en prise par complémentarité de formes.

2. Convoyeur selon la revendication 1, **caractérisé en ce que** la venue en prise entre des éléments d'entraînement (30, 30') respectifs et des supports d'articles de transport (6) peut être annulée ou supprimée au moins dans une zone de la voie de transport tout en conservant la possibilité du couplage par friction des supports d'articles de transport (6) avec la bande d'entraînement (24).

3. Convoyeur selon la revendication 1 ou 2, **caractérisé en ce que** les éléments d'entraînement (30) sont disposés sur la bande d'entraînement (24).

4. Convoyeur selon l'une quelconque des revendications précédentes, **caractérisé en ce que** les séparateurs de section de bande (30, 30') se suivent à distances régulières.

5. Convoyeur selon l'une quelconque des revendications 1 à 4, **caractérisé en ce que** la bande d'entraînement (24) est une bande plate, en particulier une bande plate en acier et les séparateurs de section de bande (30, 30') sont des goupilles formant des éléments d'entraînement, dépassant rigidement de la bande d'entraînement.

6. Convoyeur selon l'une quelconque des revendications 1 à 5, **caractérisé en ce qu'**un couplage par complémentarité de formes entre un élément d'entraînement respectif (30) et un support d'articles de transport guidé sur rails respectif peut être annulé ou supprimé par un mouvement relatif déterminé entre l'élément d'entraînement (30) et le support d'articles de transport (6) transversalement au sens de transport (14) tout en conservant la possibilité de couplage par friction des supports d'articles de transport (6) avec la bande d'entraînement (24) et **en ce que** des moyens sont présents pour le déclenchement du mouvement relatif déterminé.

7. Convoyeur selon l'une quelconque des revendications précédentes 1 à 6, **caractérisé en ce que** le couplage positif entre un élément d'entraînement respectif et un support d'articles de transport guidés sur rail respectif peut être annulé ou supprimé par un mouvement de torsion de la bande d'entraînement dans une section de bande concernée en pivotant les éléments d'entraînement et **en ce que** des moyens sont présents pour le déclenchement du mouvement de torsion.

8. Convoyeur selon la revendication 7, **caractérisé en ce que** le mouvement relatif est un mouvement de levage et d'abaissement du support d'articles de transport (6) par rapport à l'élément d'entraînement (30) et/ou un mouvement de levage ou d'abaissement de l'élément d'entraînement par rapport au support d'articles de transport et **en ce que** des moyens sont présents pour le déclenchement du mouvement de levage ou d'abaissement.

9. Convoyeur selon l'une quelconque des revendications précédentes 1 à 8, **caractérisé en ce que** le rail (2) présente dans une section de voie de transport déterminée un tracé tel tracé qu'il lève ou abaisse à un niveau les supports d'articles de transport (6) par rapport à la bande d'entraînement (24) afin d'établir ou de supprimer le couplage par complémentarité de formes entre des éléments d'entraînement (30) et des supports d'articles de transport (6), sachant que le couplage par friction entre les supports d'articles de transport (6) et les éléments d'entraînement (30) est possible en continu dans la section de voie de transport déterminée.

10. Convoyeur selon l'une quelconque des revendications précédentes 1 à 9, **caractérisé en ce qu'**il s'agit d'un dispositif de transport de suspension, pour lequel les supports d'articles de transport (6) sont guidés de manière mobile suspendus au rail (2) le long de la voie de transport, sachant que les supports d'articles de transport (6) présentent un corps de base (8), une section suspendue (10) pour l'appui contre le rail (2), une section de logement d'articles de transport (16) et une section de couplage par friction (28) avec une surface de friction (26) orientée dans l'état de transport du support d'articles de transport (6) concerné sur le rail (2) latéralement à la bande d'entraînement (24) pour le couplage par friction avec la bande d'entraînement (24).

11. Convoyeur selon l'une quelconque des revendications précédentes 1 à 10, **caractérisé en ce que** des supports d'articles de transport (6) peuvent être retenus de manière à former un bouchon de supports d'articles de transport dans des sections de voie, dans lesquelles le couplage par complémentarité de formes entre des éléments d'entraînement (30) et des supports d'articles de transport (6) est supprimé, sachant que les supports d'articles de transport (6) présentent des moyens de libération (40), avec lesquels des supports d'articles de transport (6) arrêtés précédemment en bouchon libèrent des supports d'articles de transport (6) avançant respectivement directement pour la suppression ou au moins la réduction de leur couplage par friction avec la bande d'entraînement (24).

12. Bande d'entraînement pour un convoyeur selon l'une quelconque des revendications précédentes, qui est réalisée comme une bande plate et présente au moins une surface de friction s'étendant dans le sens longitudinal de bande pour le couplage par friction avec des supports d'articles de transport (6), sachant qu'elle présente des séparateurs de section de bande (30) dépassant d'un côté plat de la bande plate, qui structurent la bande d'entraînement (24) selon la longueur en sections de bande successives (25), auxquelles des supports d'articles de transport (6) individuels peuvent être associés pour leur entraînement, **caractérisée en ce que** les séparateurs de section de bande (30) sont réalisés comme des éléments d'entraînement (30), en particulier des goupilles (30), pour le couplage par complémentarité de formes avec des supports d'articles de transport (6).

13. Bande d'entraînement selon la revendication 12, **caractérisée en ce que** plusieurs rangées s'étendant les unes à côté des autres d'éléments d'entraînement (30) se suivant dans le sens longitudinal de la bande sont prévues.
